# EUROPÄISCHE PATENTSCHRIFT

(11) **EP 1 658 535 B1**
(45) Veröffentlichungstag und Bekanntmachung des Hinweises auf die Patenterteilung: **29.08.2012**
(21) Anmeldenummer: 04763499.3
(22) Anmeldetag: 26.07.2004
(51) Int. Cl.: G05B 19/042

(54) **VERFAHREN ZUR GRAPHISCHEN PROJEKTIERUNG DER STEUERUNG EINER TECHNISCHEN ANLAGE MIT INTEGRIERTER PROJEKTIERUNG VON BEDIENGERÄTEN**
METHOD FOR GRAPHICALLY PLANNING THE CONTROL OF A TECHNICAL INSTALLATION INVOLVING THE INTEGRATED PLANNING OF CONTROL UNITS
PROCEDE DE PROJECTION GRAPHIQUE DE LA COMMANDE D'UNE INSTALLATION TECHNIQUE A PROJECTION INTEGREE D'APPAREILS D'EXPLOITATION

(30) Priorität: 27.08.2003 DE 10339764
(43) Veröffentlichungstag der Anmeldung: 24.05.2006
(73) Patentinhaber: SIEMENS AKTIENGESELLSCHAFT, 80333 München (DE)
(72) Erfinder: MELZER, Roland, 90425 Nürnberg (DE); PETER, Michael, 90587 Veitsbronn (DE); WIEDENBERG, Peter, 90537 Feucht (DE)
(86) Internationale Anmeldenummer: PCT/EP2004/008349
(87) Internationale Veröffentlichungsnummer: WO 2005/022286

(56) Entgegenhaltungen:
- WO-A1-03/093911
- DE-A1- 10 065 401
- DE-A1- 10 219 912
- DE-A1- 10 348 564
- US-A- 5 905 649

## Beschreibung

Es ist bekannt, die Steuerung einer technischen Anlage durch ein Automatisierungssystem, z.B. einer speicherprogrammierbaren Steuerung, mittels graphischer Verfahren und Einrichtungen zu projektieren. So wird von der Firma SIEMENS z.B. die Software STEP 7 eingesetzt, welche einem Anwender die Erstellung von Steuerungsprogrammen auf der Grundlage von Softwarefunktionsbausteinen ermöglicht. Je nach Anwendungsfall wird dabei eine Vielzahl unterschiedliche Softwarefunktionsbausteine, wie z.B. Ablaufbausteine, Datenbausteine, Systembausteine, Organisationsbausteine u. gl. auf graphische Weise definiert und mit visuellen Mitteln zu einem Steuerungsprogramm logische verschaltet. Das Steuerungsprogramm veranlasst dann eine speicherprogrammierbare Steuerung SPS, d.h. einen Programmable Logic Control PLC, die Betriebsmittel des jeweiligen technischen Prozesses, wie z.B. Messgeber, Antriebe, Ventile und vieles mehr, in der durch die Softwarefunktionsbausteine und deren logische Verschaltung im Steuerungsprogramms definierten Weise zu betreiben. Dabei werden Datentelegramme meistens über eines Feldbusses z.B. in Echtzeit zwischen Anlagenbetriebsmitteln und der SPS ausgetauscht.

Neben dieser reinen Steuerungsebene kommt der Bedien- und Beobachtungsebene eine immer größere Bedeutung zu. Hierfür steht spezielle Hard- und Software zur Verfügung, die auch HMI Elemente genannt werden. Zur Anzeige und Bedienung stehen unterschiedliche Arten von HMI Terminals zur Verfügung, die auch als Operator Interfaces bezeichnet werden. Von einem einfachen "Push Button Panel", d.h. einem Array von programmierbaren Funktionstasten, bis hin zu einem multifunktionalen Panel, d.h. einem LCD Display das z.B. auch als ein Touch Screen ausgebildet sein kann, gibt es eine breite Palette von Anzeige- und Bedieneinheiten. Diese sind über spezielle Ankopplungen oder einen Feldbus mit der technischen Anlage und der speicherprogrammierbaren Steuerung verbunden. Auch für die Operator Panels wird Projektierungssoftware benötigt. Hiermit wird einerseits eine Projektierung der datentechnischen Ankopplung der zur Bedienung eingesetzten HMI Hardware an das Automatisierungssystem und die gesteuerte technische Anlage ermöglicht. Insbesondere können hiermit im einfachsten Fall anzeigbaren Messwerte bzw. die zur Bedienung, d.h. zur Versorgung mit Sollwerten, vorgesehenen Anlagenbetriebsmittel ausgewählt werden. Andererseits ermöglicht die Projektierungssoftware einem Anwender auch eine anwendungsabhängige Auswahl und Gestaltung von Art und Umfang der auf der HMI Hardware zur Anzeige gebrachten Werte aus der technischen Anlage. Diese kann von einfachen Meldetexten bis hin zu komplexen, interaktiven Prozessabbildern reichen. So ermöglicht z.B. einfache Projektierungssoftware eine direkte Projektierung von HMI Panels. Für anlagen- und maschinennahe Visualisierungen können HMI Projekte für Operator Panels mit spezieller Visualisierungssoftware realisiert werden. Schließlich können komplexe Prozesse mit Hilfe von SCADA Software, d.h. Supervisor Control and Data Akquisition" Software, visualisiert und für Betreiber eines technischen Prozesses komfortabel und sicher beobacht- und bedienbar werden.

Bislang ist es bei der Automatisierung einer technischen Anlage üblich, dass die Projektierung des Steuerungsprogramms für die speicherprogrammierbare Steuerung und die Projektierung von HMI Elementen getrennt voneinander erfolgt. Vielfach wird ein HMI System nachträglich auf ein bereits projektiertes Steuerungsprogramm aufgesetzt. Auch wenn dabei z.B. auf die Softwarefunktionsbausteine und deren Verschaltung im Steuerungsprogramm zurückgegriffen werden kann, erfolgt die Programmerstellung der HMI Komponenten in der Regel zeitlich getrennt und vor allem unter Einsatz von separater HMI Projektierungssoftware. Dies ist aufwendig.

Die Druckschrift US 5,905,649 - Sojoodi et.al. "System and method for performing type checking and class propagation of attributes in a graphical data flow program" zeigt ein graphisches Programmiersystem für ein PC-basiertes Messwerterfassungs und -verarbeitungssystem. Dabei wird mittels eines graphischen Verfahrens ein System und eine Software projektiert, die sowohl die graphische Benutzeroberfläche für das Bedienen und das Beobachten der Messwerterfassungsaufgabe bereitstellt, als auch die Messdatenerfassung und -verarbeitung durchführt.

Die Druckschrift WO 03/093911 A1 - Ten Brink "Automation tool for supporting planning and producing an automated technical process and corresponding method" zeigt ein graphisches Projektierungssystem für die Projektierung und Software-Erstellung einer industriellen Automatisierungseinrichtung, wobei mittels der Projektierungsoberfläche auch die Verknüpfung von Signalen und Steuerungsleitungen zu Schnittstellen eines Bedienen- und Beobachtungsgerätes projektiert werden kann.

Der Erfindung liegt die Aufgabe zugrunde, ein Verfahren zur graphischen Projektierung der Steuerung einer technischen Anlage und ein entsprechendes graphisches Projektierungssystem anzugeben, womit in einem Arbeitszug bzw. mit einem Projektierungstool zusätzlich zur Erstellung des Steuerungsprogrammes auch eine Projektierung von HMI Elementen möglich ist.

Die Aufgabe wird gelöst mit dem im Anspruch 1 angegebenen Verfahren.

Das erfindungsgemäße Verfahren zur graphischen, objektorientierten Projektierung einer Steuerung für eine technische Anlage interagiert mit einem Projektierungsfenster, das einen Arbeitsbereich zumindest mit einem Fenster für eine Projektierebene zur Anzeige und Verschaltung von graphischen Objekten und mit einem Fenster für eine Symbolbibliothek mit den für eine Projektierung verfügbaren graphischen Objekten aufweist. Dabei sind zumindest graphische Steuerungsobjekte vorhanden, welche technische Objekte der Anlage repräsentieren, und graphische Bediengeräteobjekte, welche für eine Steuerung einsetzbare Bediengeräte repräsentieren.

In einem ersten Schritt des erfindungsgemäßen Verfahrens werden die graphischen Steuerungsobjekte einer Projektierung im Fenster für die Symbolbibliothek aktiviert und in das Fenster für die Projektierebene übertragen. Danach werden in einem zweiten Schritt im Fenster der Projektierebene die übertragenen graphischen Steuerungsobjekte entsprechend einer anlagenspezifischen Steuerungsaufgabe logisch verschaltet. Weiterhin wird in einem dritten Schritt zumindest ein graphisches Bediengeräteobjekt im Fenster der Symbolbibliothek aktiviert und in das Fenster der Projektierebene übertragen. Schließlich wird in einem vierten Schritt des erfindungsgemäßen Verfahrens das graphische Bediengeräteobjekt ausgewählten graphischen Steuerungsobjekten zugeordnet.

Die Erfindung bietet den besonderen Vorteil, dass in einem geschlossenen Projektierungsverfahren sowohl die für die Steuerung von Anlagenbetriebsmitteln notwendigen graphischen Steuerungsobjekte als auch die für die Bedienung und Beobachtung der Steuerung der technischen Anlage erforderlichen Bediengeräteobjekte definiert und logisch verschaltet werden können. Die Projektierung der HMI Funktionen ist mit Hilfe der Erfindung somit in die Gesamtprojektierung sowohl ablauftechnisch als auch funktionell integriert. Besonders vorteilhaft dabei ist es, dass die für die Projektierung der graphischen Steuerungsobjekte verfügbaren Elemente im Projektierungsfenster, d.h. die Fenster für die Symbolbibliothek und die Projektierebene, in der gleichen Weise auch für die Projektierung der graphischen Bediengeräteobjekte für die eingesetzten HMI Panels verwendet werden.

Vorteilhaft ist es, wenn im Projektierungsfenster die Aktivierung und Übertragung von graphischen Steuerungs- oder Bediengeräteobjekten durch graphische Interaktionen erfolgen. Besonders werden dabei Drag and Drop Aktionen als graphische Interaktionen auf die graphischen Objekte mit Hilfe von graphischen Bedienmitteln ausgeübt.

Zur weiteren Verbesserung der Funktionalität des erfindungsgemäßen Projektierungsverfahrens kann im Projektierungsfenster ein weiteres Fenster vorhanden sein, in dem ein Verzeichnisbaum für die in der Projektierebene befindlichen graphischen Objekte automatisch generiert und verwaltet wird.

Mit dieser Ausführung wird die Übersichtlichkeit bei der Projektierung erleichtert, da ein Verzeichnisbaum auf Grund seiner in Ebenen gestaffelten Listenstruktur einen besseren Überblick über den jeweiligen Stand einer Projektierung gewährleistet, als die Inhalte der Projektierebene. Zudem kann mit Hilfe des Verzeichnisbaumes auf einfache und übersichtliche Weise zwischen den verschiedenen Anzeigeinhalten des Fensters für die Projektierebene umgeschaltet werden. Es können also durch graphische Interaktionen im Verzeichnisbaum, insbesondere durch Aktivierungen, die zu einem Zweig des Verzeichnisbaumes gehörigen graphischen Objekte im Fenster der Projektierebene zur Anzeige angezeigt werden können.

Vorteilhaft ist der Verzeichnisbaum so strukturiert, dass dieser einen ersten und einen zweiten Hauptzweig aufweist. In dem ersten Hauptzweig sind zumindest die graphischen Steuerungsobjekte einer Projektierung aktivierbar und im zweiten Hauptzweig zumindest die graphischen Bediengeräteobjekte der Projektierung. Auch diese Strukturierung macht den Vorteil der Erfindung deutlich, indem bei der Projektierung die für die Prozessführung der technischen Anlage benötigten graphischen Steuerungsobjekte und die für die dazugehörige Bedienung und Beobachtung eingesetzten graphischen Bediengeräteobjekte quasi gleichberechtigt in entsprechenden Hauptzweigen des Verzeichnisbaumes verwaltet werden.

Schließlich ist es gemäß einer weiteren Ausführung des erfindungsgemäßen Verfahrens vorteilhaft, wenn der Verzeichnisbaum einen dritten Hauptzweig aufweist, in dem die den graphischen Steuerungsobjekten zugeordneten Ankopplungen an einen Datenbus verwaltet werden. Eine solche Struktur bietet dann einen optimalen Überblick und Zugriff auf die wichtigsten Ebenen, die bei der Automatisierung eines technischen Prozesses projektiert werden müssen, nämlich auf die Steuerungsebene, die Bedien- und Beobachtungsebene und die Datenübertragungsebene, insbesondere über einen Feldbus.

Das erfindungsgemäße System zur graphischen Projektierung einer Steuerung für eine technische Anlage, weist auf ein Projektierungsfenster, graphische Interaktionsmittel und Projektierungsmittel. Dabei weist das Projektierungsfenster einen Arbeitsbereich auf, der erfindungsgemäß zumindest aufgeteilt ist in ein Fenster für eine Symbolbibliothek der im System für eine Projektierung einer technischen Anlage verfügbaren graphischen Objekte, in ein Fenster für eine Projektierebene zur Anzeige und logischen Verschaltung der für die Projektierung einer technischen Anlage ausgewählten graphischen Objekte und in ein Fenster für einen Verzeichnisbaum der im Fenster für die Projektierebene ausgewählten graphischen Objekte einer Projektierung. Die graphischen Interaktionsmittel ermöglichen eine Auswahl von graphischen Objekten im Fenster für die Symbolbibliothek, und eine Generierung und logische Verschaltung der ausgewählten graphischen Objekte im Fenster für die Projektierebene. Die Projektierungsmitteln passen dann nach einer Generierung der ausgewählten graphischen Objekte im Fenster für die Projektierebene das Verzeichnis der graphischen Objekte im Fenster für den Verzeichnisbaum automatisch an.

Dieses erfindungsgemäße System ermöglicht eine kompakte, in sich geschlossene Projektierung aller für eine Automatisierung erforderlichen graphischen Objekte in einem einzigen Projektierungstool. Hiermit können abhängig von der Belegung der Symbolbibliothek alle Typen von graphischen Objekten in der gleichen Weise verarbeitet werden. Bevorzugt sind dabei in der Symbolbibliothek als graphische Objekte zumindest verfügbar graphische Steuerungsobjekte, welche technische Objekte einer technischen Anlage repräsentieren, und graphische Bediengeräteobjekte, welche für eine Steuerung einsetzbare Bediengeräte repräsentieren.

Besonders vorteilhaft ermöglichen die graphischen Interaktionsmittel eine Auswahl und Zuordnung eines graphischen Bediengeräteobjektes zu einer Gruppe von graphischen Steuerungsobjekten, und die Projektierungsmittel generieren nach einer Zuordnung im Fenster für den Verzeichnisbaum für das graphische Bediengeräteobjekt automatisch einen Satz von Bedienungssubobjekten.

Bei dieser Ausführung wird die Flexibilität des erfindungsgemäße Systems besonders deutlich, indem abhängig von der jeweiligen Struktur der technischen Anlage und den Bedienungsund Beobachtungsanforderungen des jeweiligen Betreibers bereits bei der Projektierung der Steuerung allen, einer Gruppe von oder ach einzelnen der dazugehörigen graphischen Steuerungsobjekte anwendungsabhängig ein graphisches Bediengeräteobjekt zugewiesen werden kann. Im Verzeichnisbaum wird in Folge davon dann automatisch ein Satz von Bedienungssubobjekten generiert. Dabei kann es sich um graphische Bedienobjekte, Alarmobjekte, Rezepturobjekte, Archivobjekte und vieles mehr handeln, welche für die Projektierung eines Bediengeräts automatisch bereitgestellt werden. Dies wird am Hand der in den Figuren dargestellten Ausführungsbeispiele noch näher erläutert werden.

Die Erfindung ist auch gerichtet auf ein Computerprogrammprodukt mit einem Computerprogramm, das Softwaremittel zur Durchführung des oben angeführten Verfahrens zur graphischen Projektierung einer Steuerung für eine technische Anlage aufweist, wenn das Computerprogramm in einem Datenverarbeitungssystem, einem HMI Gerät, einem Automatisierungssystem oder einer graphischen Projektiereinheit ausgeführt wird.

Weitere vorteilhafte Ausführung werden nachfolgend im Rahmen der Erläuterung der in den Figuren dargestellte Ausführungsbeispiele erklärt.

Die Erfindung wird an Hand der nachfolgend kurz angegebenen Figuren näher erläutert. Dabei zeigt
- FIG 1: eine beispielhafte Ausführung für ein Projektierungsfenster des erfindungsgemäßen Projektierungssystems,
- FIG 2: eine Anwendung des Projektierungsfensters von FIG 1 für die Projektierung einer beispielhaften Steuerung, wobei eine Definition, Übertragung und Verschaltung graphischer Steuerungsobjekte einer Projektierung von der Symbolbibliothek in die Projektierebene mittels Drag & Drop Aktionen erfolgt,
- FIG 3: das Projektierungsfenster von FIG 2, wobei eine Aktivierung und Zuordnung eines Bediengeräteobjektes von der Symbolbibliothek zu den graphischen Steuerungsobjekten in die Projektierebene mittels Drag & Drop Aktionen erfolgt,
- FIG 4: eine zu FIG 3 alternative Art der Zuordnung eines Bediengeräteobjektes zu den graphischen Steuerungsobjekten einer Projektierung durch eine Drag & Drop Aktion im dem Fenster mit dem Verzeichnisbaum, und
- FIG 5: das Projektierungsfenster von FIG 3 in einer HMI Detailansicht, wobei im Verzeichnisbaum für das Bediengeräteobjekt den graphischen Steuerungsobjekten der Projektierung zugeordnete Bedienungssubobjekte automatisch generiert und in der Projektierebene in einem Übersichtsbild angezeigt werden,

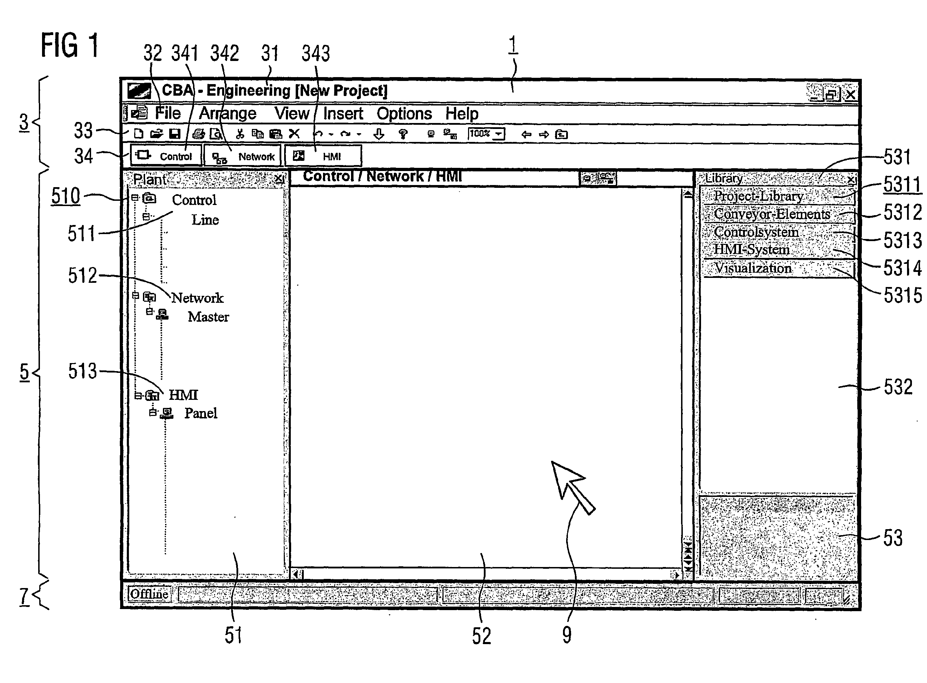

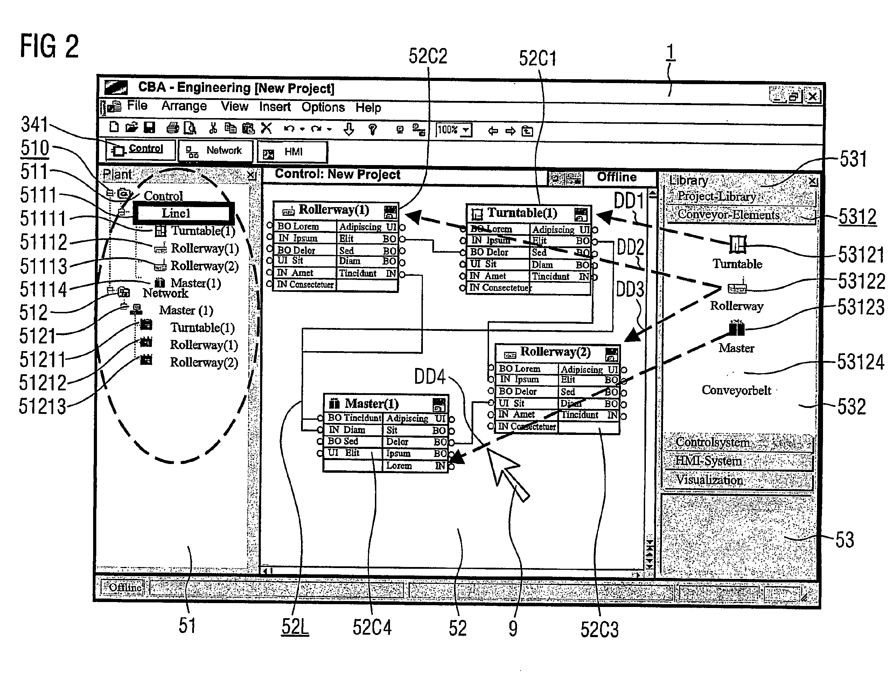

FIG 1 zeigt eine beispielhafte Ausführung für ein gemäß dem erfindungsgemäßen Projektierungssystem gestaltetes Projektierungsfenster 1. Das Projektierungsfenster 1 ist Grundlage auch für die Darstellungen in den weiteren Figuren 2 bis 5, mit denen beispielhaft die einzelnen Schritte des erfindungsgemäßen Projektierungsverfahrens erläutert werden.

Das beispielhafte Projektierungsfenster 1 ist horizontal beispielhaft in drei Bereiche unterteilt, d.h. einen oberen Fensterbereich 1 für Symbolleisten, einen mittleren Fensterbereich 5 für den Arbeitsbereich, auch Workbench genannt, und einen unteren Fensterbereich 7 für Statusinformationen. Der obere Fensterbereich 1 enthält dabei beispielhaft vier weitere Symbolleisten. Die erste zur Programm- und Dateianzeige dienende Symbolleiste 31 enthält entsprechend den Konventionen von windowsbasierten Programmen einerseits eine Nennung des Progammnamens. Das erfindungsgemäße Projektierungssystems ist dabei beispielhaft mit der Bezeichnung "CBA - Engineering" überschrieben, wobei CBA eine Abkürzung von "Component Based Automation" darstellt. Es schließt sich in eckigen Klammern eine Nennung der jeweiligen Projektdatei an, für die im vorliegenden Falle noch kein individueller Projektname vergeben wurde, also die allgemeine Bezeichnung [New Project] erscheint. Die darunter befindliche Symbolleiste 32 enthält Pulldownmenüs zur Programmbedienung, und die Symbolleiste 33 schließlich Anwenderstandardfunktionen. Da die Symbolleisten 32, 33 im oberen Fensterbereich 3 und der untere Fensterbereich 7 für Statusinformationen ebenfalls den Konventionen von windowsbasierten Programmen entsprechen, sollen diese nachfolgend nicht näher erläutert werden.

Erfindungsgemäß ist der für den Arbeitsbereich 5 vorgesehene mittlere Bereich des Projektierungsfensters 1 wiederum in drei Fenster aufgeteilt, nämlich in ein Fenster 51 für einen Verzeichnisbaum 510, in ein Fenster 52 für eine Projektierebene bzw. in ein Fenster 53 für eine Symbolbibliothek 531. Diese sind im Beispiel der FIG 1 vertikal neben einander liegend angeordnet und mit "Plant", "Control/Network/HMI" bzw. "Library" überschrieben.

Erfindungsgemäß dient das Fenster 52 für die Projektierebene, nachfolgend kurz Projektierebene genannt, zur Anzeige und Verschaltung von graphischen Objekten bei einer Steuerungsprojektierung. Die im Beispiel der Figur 1 rechts und links davon befindlichen Fenster 53 und 51 dienen zur Unterstützung dieser graphischen Projektierung. So sind in dem Fenster 53 die in einer Symbolbibliothek 531 für eine Projektierung verfügbaren graphischen Objekte verzeichnet. Dabei sind erfindungsgemäß zumindest graphische Steuerungsobjekte vorhanden, welche technische Objekte der Anlage repräsentieren, und graphische Bediengeräteobjekte, die für eine Steuerung einsetzbare Bediengeräte repräsentieren. Die Steuerungsobjekte können auch als CBA Objekte, d.h. Component Based Automation Objekte, und die Bediengeräteobjekte auch als HMI Objekte, d.h. Human Machine Interface Objekte, bezeichnet werden. Im Beispiel der FIG 1 ist der Inhalt der Symbolbibliothek 531 vorteilhaft in Mappen gegliedert. Dabei können in der Mappe 5311 "Project-Library" bereits vorgenommene Projektierungen gespeichert werden. Die Mappen 5312 und 5313 enthalten Sammlungen von graphischen Steuerungsobjekten, wobei in 5312 "Conveyor-Elements", d.h. Förderemente, repräsentierende Objekte und in 5313 "Controlsystem", d.h. Steuerungskomponenten, repräsentierende Objekte zusammengestellt sind. Die Mappen 5314 und 5315 enthalten im Beispiel der FIG 1 graphische Bediengeräteobjekte, wobei in 5314 "HMI-System" die bei einer Projektierung verwendbaren HMI Geräte und in 5315 "Visualization" verfügbare Bedienelemente verzeichnet sind. Die pro Mappe enthaltenen graphischen Objekte werden in einem darunter befindlichen Anzeigebereich 532 sichtbar gemacht. Dies wird an den Figuren 2 bis 5 noch näher erläutert werden.

Bei der Durchführung einer Projektierung kann ein Bediener anlagenspezifisch benötigte Objekte in der entsprechenden Mappe im Fenster 53, aber auch im Fenster 51 für den Verzeichnisbaum 510, markieren und vorteilhaft mit Hilfe von graphischen Interaktionen in die Projektierebene 52 übertragen. Als Interaktionen können vorteilhaft Drag and Drop Aktionen mit Hilfe von graphischen Bedienmitteln, insbesondere einem über eine sogenannte Computer Maus geführten visuellen Cursor 9, auf die graphischen Objekte ausgeübt werden.

Die in der Projektierebene 52 generierten und logisch verschalteten graphischen Steuerungsobjekte werden erfindungsgemäß im Fenster 51 für den Verzeichnisbaum 510 automatisch visualisiert. Der im Beispiel der Figur 1 dargestellte Verzeichnisbaum 510 weist hierzu drei Hauptzweige 511, 512, 513 auf, die in FIG 1 zunächst nur auszugsweise, in den folgenden Figuren in weiteren Details dargestellt sind. Im ersten Hauptzweig 511 mit der Bezeichnung CONTROL sind die graphischen Steuerungsobjekte einer Projektierung verzeichnet. Der nachfolgend näher beschriebene Anlagenteil ist beispielhaft als LINE1 bezeichnet. In einem weiteren Hauptzweig 513 mit der Bezeichnung HMI sind die graphischen Bediengeräteobjekte einer Projektierung verzeichnet. Bei dem in den Figuren dargestellten Beispiel ist ein Bediengerät eingesetzt, dass im Verzeichnisbaum 510 unter dem Begriff PANEL verzeichnet ist.

Gemäß einer vorteilhaften, in FIG 1 bereits dargestellten weiteren Ausführung weist der Verzeichnisbaum 510 einen dritten Hauptzweig 512 mit der Bezeichnung NETWORK auf. In diesem werden die den graphischen Steuerungsobjekten vom Hauptzweig 511 CONTROL bei der Projektierung zugeordneten Ankopplungen an einen Datenbus verwaltet. Im Hauptzweig 512 ist ein als MASTER bezeichnetes Gerät bereits als eine Hauptankoppeleinheit der Steuerungsobjekte an einen Datenbus verzeichnet.

Wiederum bevorzugt durch graphische Interaktionen mit dem visuellen Cursor 9 sind die einzelnen Hauptzweige 511, 512, 513 aktivierbar. Hierdurch werden die dazugehörigen Projektbestandteile in der Projektierebene 52 zur Anzeige gebracht. Dies ist in der Kopfzeile der Projektierebene 52 durch die Beschriftung "Control/Network/HMI" zum Ausdruck gebracht. In den folgenden Figuren wird gezeigt werden, wie durch Aktivierung von Unter- und Subzweigen eines Hauptzweigs im Verzeichnisbaum 510 weitere Projektierungsbestandteile in der Projektierebene 52 visualisiert werden können. Eine Umschaltung zwischen diesen Anzeigezuständen des Fensters 52 für die Projektierebene kann auch über entsprechend beschriftete virtuelle Schaltelemente in der Symbolleiste 34 vorgenommen werden. So kann der Zustand "Control", "Network", oder "HMI" in der Projektierungsebene 52 durch Betätigung eines Tasters 341, 342, oder 343 in der Symbolleiste 34 aktiviert werden.

FIG 2 zeigt eine Anwendung des Projektierungsfensters 1 von Figur 1 für die Projektierung einer beispielhaften Steuerung, wobei eine Definition, Übertragung und Verschaltung graphischer Steuerungsobjekte der Projektierung von der Symbolbibliothek 531 in die Projektierebene 52 mittels Drag & Drop Aktionen DD1 - DD4 erfolgt. Bei der im dargestellten Beispiel zu projektierenden Teil handelt es sich um eine Förderstrecke in einer technischen Anlage. Für die Projektierung ist somit in der Symbolbibliothek 531 die Mappe 5312 aktiviert, welche "Conveyor-Elements" enthält, d.h. Förderelemente. Diese enthält graphische Steuerungsobjekte, welche entsprechende Anlagenbestandteile repräsentieren. So sind im Anzeigebereich 532 der Mappe 5312 beispielhaft ein Steuerungsobjekt TURNTABLE 53121, ROLLERWAY 53122, Master 53123 und CONVEYORBELT 53124 verzeichnet.

Entsprechend dem erfindungsgemäßen Projektierverfahren werden in einem ersten Schritt diejenigen graphischen Steuerungsobjekte, welche für die jeweilige Projektierung benötigt werden, im Fenster 53 für die Symbolbibliothek 531 aktiviert und in das Fenster 52 für die Projektierebene übertragen. So wird im Beispiel der Figur 2 das graphische Steuerungsobjekt 53121 TURNTABLE im Anzeigebereich 532 aktiviert und bevorzugt mittels einer Drag & Drop Aktion DD1 über den Cursor 9 in die Projektierebene 52 gezogen. Dort wird automatisch vom Projektierungssystem ein logisch verschaltbarer Softwarefunktionsbaustein 52C1 TURNTABLE generiert, der eine Fülle von logischen Ein- und Ausgängen auf der linken bzw. rechten Seite aufweist. Diese bilden alle parametrierbaren Ein- und Ausgangsgrößen des jeweiligen Softwarefunktionsbausteins nach und sind aus Gründen der Vereinfachung in den Figuren nur symbolisch beschriftet. Zur Vervollständigung der Projektierung wurden in entsprechender Weise mittels weiterer Drag & Drop Aktionen DD2 bis DD4 ein Steuerungsobjekt 53122 ROLLERWAY, ein weiteres Steuerungsobjekt 53122 ROLLERWAY und ein Steuerungsobjekt 53123 MASTER aktiviert und in die Projektierebene 52 übertragen. Dort wurden wiederum automatisch vom Projektierungssystem Softwarefunktionsbausteine 52C2 ROLLERWAY, 52C3 ROLLERWAY und 52C4 MASTER generiert. Im Beispiel wird kein Steuerungsobjekt vom Typ CONVEYORBELT 53124 benötigt.

In einem zweiten Schritt des erfindungsgemäßen Projektierverfahrens werden die übertragenen graphischen Steuerungsobjekte 52C1 bis 52C4 im Fenster 52 der Projektierebene entsprechend einer anlagenspezifischen Steuerungsaufgabe logisch verschaltet. Die Steuerung wird also durch eine logische Verschaltung ausgewählter Ein- und Ausgänge der dazugehörigen Softwarefunktionsbausteine programmiert. Das dadurch im Beispiel der FIG 2 entstandene logische Verschaltungsnetz ist mit dem Bezugszeichen 52L versehen.

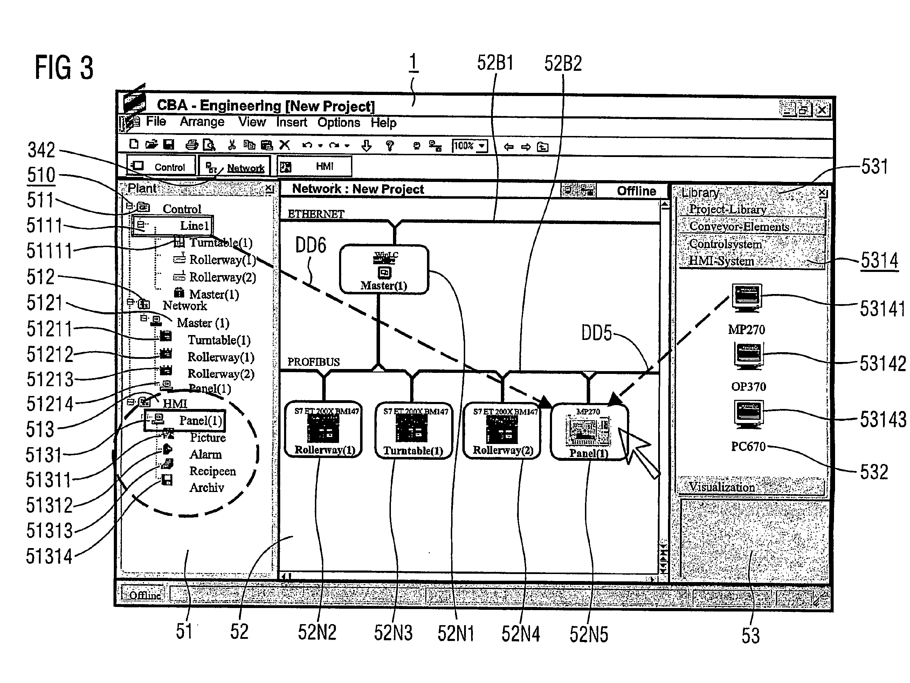

Erfindungsgemäß wird der Verzeichnisbaum 510 im Fenster 51 nach den obigen Projektierungen automatisch aktualisiert. Unterhalb des Unterzweiges 5111 LINE1 im Hauptzweig 511 CONTROL wurden somit vom Projektierungssystem für jedes graphische Steuerungsobjekt 52C1 bis 52C4 in der Projektierebene 52 eigene Unterzweige 51111 "Turntable 1", 51112 "Rollerway 1", 51113 "Rollerway 2" und 51114 "Master 1" generiert. Diese sind einzeln aktivierbar. Durch die Aktivierung eines Unterzweiges können in der Projektierebene 52 z.B. spezifische HMI oder Service Darstellungen zur Anzeige gebracht werden. Weiterhin wurden vom Projektierungssystem auch die Unterzweige zum Hauptzweig NETWORK 512 entsprechend vervollständigt. Dabei sind die den graphischen Steuerungsobjekten zugehörigen Unterzweige 51211 "Turntable 1", 51212 "Rollerway 1" und 51213 "Rollerway 2" dem Unterzweig 5121 "MASTER 1" untergeordnet. Dies wird nachfolgend an FIG 3 noch erläutert.

FIG 3 zeigt das Projektierungsfenster von FIG 2, wobei eine Aktivierung, Übertragung und Zuordnung eines Bediengeräteobjektes von der Symbolbibliothek zu den graphischen Steuerungsobjekten in der Projektierebene mittels Drag & Drop Aktionen erfolgt. Um dies zu ermöglichen, ist in der Symbolbibliothek 531 die Mappe 5314 mit den verfügbaren graphischen Bediengeräteobjekten aktiv. Im Beispiel der FIG 3 stehen im Anzeigebereich drei Bediengeräteobjekte für eine Projektierung zur Auswahl, d.h. ein Bediengeräteobjekt 53141 vom Typ "MP270", ein Bediengerätobjekt 53142 vom Typ "OP370" oder ein Bediengerätobjekt 53143 "PC670".

Im dargestellten Beispiel wird zunächst in einem dritten Schritt des erfindungsgemäßen Projektierverfahrens im Fenster 53 der Symbolbibliothek das graphische Bediengeräteobjekt 53141 aktiviert, welches ein Operator Panel vom Typ "MP270" repräsentiert, und in die Projektierebene 52 übertragen. Da im Beispiel der FIG 3 in der Projektierebene 52 der Zustand "Network" aktiv ist und somit die datenübertragungstechnische Verkopplung der graphischen Steuerungsobjekte der Projektierung über System- und Feldbusse gezeigt ist, wird durch die Übertragung des graphischen Bediengeräteobjektes 53141 für das PANEL1 ein entsprechendes Netzwerkobjekt 52N5 generiert. Dieses wird automatisch vom Projektierungssystem in der gleichen Weise wie die den graphischen Steuerungsobjekten der Projektierung zugeordneten Netzwerkobjekte 52N2 "Rollerway 1", 52N3 "Turntable 1", 52N4 "Rollerway 2" und 52N5 "Panel 1" an einen Feldbus 52B2 angekoppelt, der im Beispiel der FIG 3 vom Typ PROFIBUS ist. Der Feldbus 52B2 ist wiederum über das Netzwerkobjekt 52N1 "Master 1" an einen Systembus 52B1 angekoppelt, der im Beispiel der FIG 3 vom Typ ETHERNET ist.

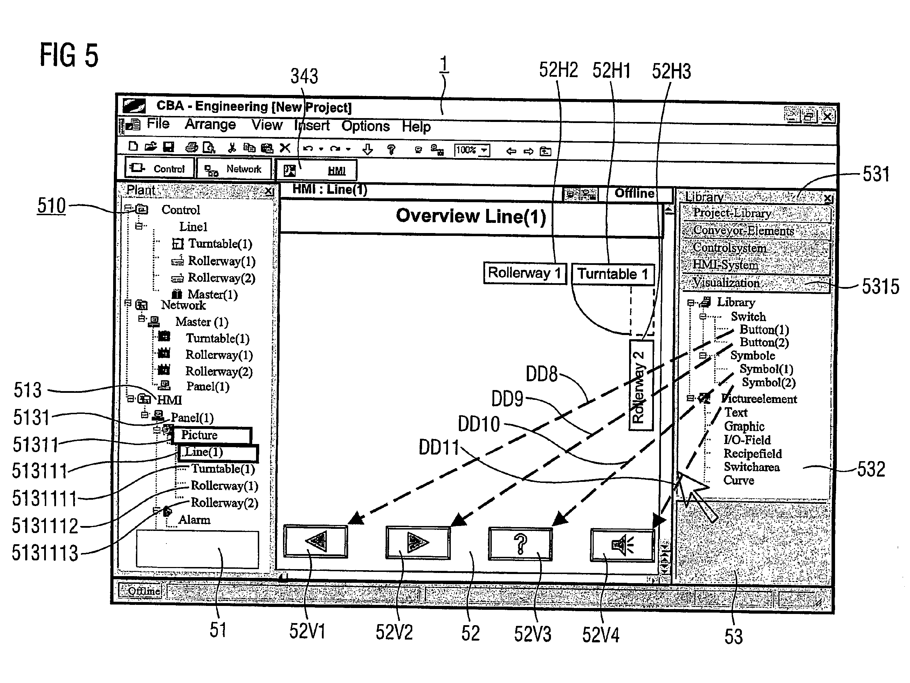

Nach Auswahl und Übertragung des graphischen Bediengeräteobjektes 53141 wird erfindungsgemäß der Verzeichnisbaum 510 im Fenster 51 von FIG 3 wiederum entsprechend ergänzt. Im Anschluß an den Hauptzweig 513 HMI wird somit ein Unterzweig 5131 für das graphische Bediengeräteobjekt generiert und mit PANEL1 beschriftet. Gemäß weiteren, in FIG 2 bereits dargestellten Ausführungsformen der Erfindung werden dem PANEL1 vom Projektierungssystem automatisch verschiedene Bedienungssubobjekte zugeordnet, im Beispiel sind dies die Bedienungssubobjekte 51311 PICTURE, 51312 ALARM, 51313 RECIPEEN und 51314 ARCHIV. So können beispielsweise mit einer Aktivierung des Unterzweiges 51311 PICTURE in einem Übersichtsbild in der Projektierebene 52 jedem graphischen Steuerungsobjekt der Gruppe LINE1 automatisch zugeordnete graphische Bedienobjekt 5131111, 5131112, 5131113 angezeigt werden. Dies wird am Beispiel der FIG 5 noch näher erläutert werden.

Weiterhin können als zweite Bedienungssubobjekte 51312 im Fenster 51 für den Verzeichnisbaum 510 jedem graphischen Steuerungsobjekt in der Gruppe der LINE1 ein Alarmobjekt automatisch zuordnet werden. Hierüber können Alarmzustände, Alarmtexte und vieles mehr für jedes graphische Steuerungsobjekt separat projektiert werden. Auch hier können die jeweiligen Alarmobjekte durch eine Aktivierung des Subzweiges 51312 in der Projektierungsebene 52 zur Anzeige gebracht werden. Schließlich können als dritte bzw. vierte Bedienungssubobjekte 51313 bzw. 51314 im Fenster 51 für den Verzeichnisbaum 510 jedem graphischen Steuerungsobjekt in der Gruppe der LINE1 ein Rezepturobjekt bzw. ein Archivobjekt automatisch zugeordnet werden. Besonders wenn ein graphisches Steuerungsobjekt eine verfahrenstechnische Komponente in einer Anlage zur Prozessautomatisierung repräsentiert, kann diesem über ein Rezepturobjekt ein spezifischer Steuerungsablauf zugewiesen werden. Schließlich ermöglicht ein Archivobjekt eine geordnete und vor allem wiederauffindbare Ablage z.B. von diversen Prozessdaten, Meldungen und Bedienungsvorgaben wie z.B. Sollwertanpassungen, die im laufenden Betrieb der projektierten technischen Anlage anfallen.

Schließlich wird auch der Verzeichnisbaum 510 im Hauptzweig 512 NETWORK automatisch ergänzt. Dabei erscheint im Anschluss an die für die graphischen Steuerungsobjekte der Projektierung vorhandenen Unterzweige 51211 "Turntable 1", 51212 "Rollerway 1" und 51213 "Rollerway 2" ein dem neu definierten PANEL1 zugeordneter Network Unterzweig 51214. Durch eine Aktivierung eines der Unterzweige, z.B. des Unterzweiges 51211 "Turntable 1", können in der Projektierungsebene 52 Ansichten visualisiert werden, welche einer dem Turntable 1 zugeordneten Anschaltbaugruppe z.B. vom Typ "S7 ET 200X BM147" entsprechende Details zeigen und Parametrierungen ermöglichen.

Es schließt sich nun der vierte Schritt des erfindungsgemäßen Projektierverfahrens an, nämlich die Zuordnung des aktivierten und übertragenen graphischen Bediengeräteobjektes PANEL1 52N5 zur Gruppe der in der Projektierebene 52 befindlichen graphischen Steuerungsobjekte der LINE1. Erst danach ist sowohl steuerungstechnisch als auch bedienungstechnisch die Projektierung der technischen Anlage abgeschlossen. Zur Ausführung dieses Schrittes stehen praktisch verschiedene Möglichkeiten zur Verfügung. Grundsätzlich ist die Durchführung des vierten Schrittes unabhängig davon, welcher Zustand in der Projektierebene 52 aktiv ist, also z.B. der Zustand CONTROL oder NETWORK. Eine Verschaltung mit einem ausgewählten und übertragenen graphischen Bediengeräteobjekt ist somit sowohl möglich, wenn im aktivem Zustand CONTROL die Softwarefunktionsbausteine 52C1 - 52C4 oder im aktivem Zustand NETWORK die Netzwerkobjekte 52N1 - 52N4 der graphischen Steuerungsobjekte angezeigt werden.

In FIG 3 ist bereits eine Möglichkeit der Zuordnung am Beispiel der im Zustand NETWORK befindlichen Projektierebene 52 gezeigt. Dabei wird durch eine graphische Interaktion DD6, insbesondere durch eine Drag & Drop Aktion, im Verzeichnisbaum 510 der Unterzweig 5111 von LINE1 aktiviert und in die Projektierebene 52 bis zum Netzwerkobjekt 52N5 von PANEL1 gezogen. Das Projektierungssystem bewirkt daraufhin die Zuordnung von PANEL1 zu der mit LINE1 bezeichneten Gruppe von Steuerungsobjekten. Nun ist gemäß dem Ziel der Erfindung zusätzlich zur steuerungstechnischen Projektierung durch logische Verschaltung der ausgewählten und generierten graphischen Steuerungsobjekte auch die Projektierung zumindest eines HMI Elements durchgeführt. In einem anderen, nicht dargestellten Fall, hätte in FIG 3 z.B. auch der Unterzweig 51111 "TURNTABLE 1" aktiviert und in die Projektierebene 52 bis zum Netzwerkobjekt 52N5 von PANEL1 gezogen werden können. Dann wäre das Panel vom Typ MP270 ausschließlich für die Bedienung und Beobachtung von einem einzigen, durch ein Steuerungsobjekt TURNTABLE repräsentierten Drehtisch der technischen Anlage zugewiesen worden.

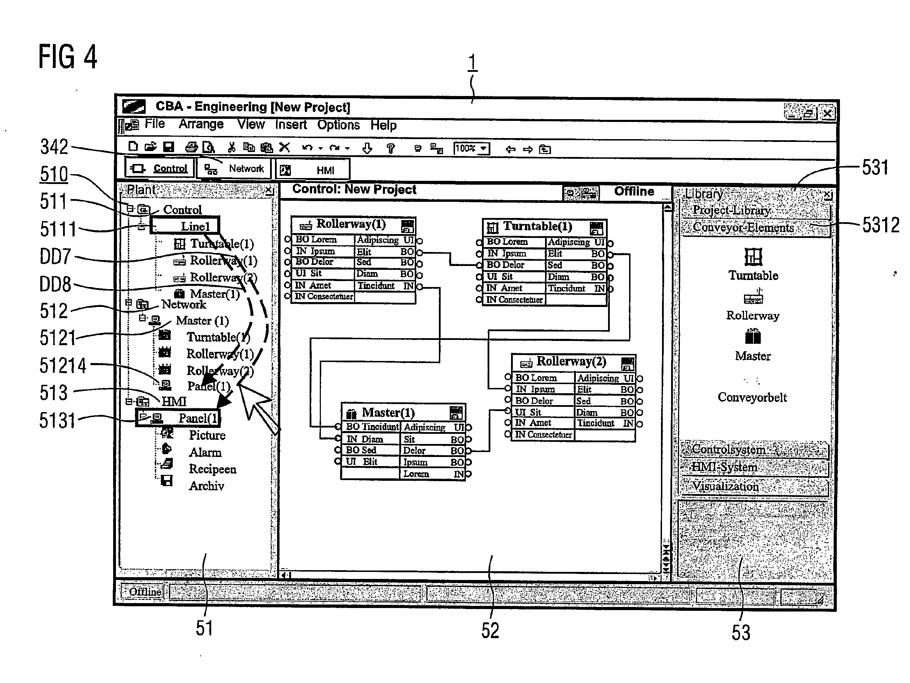

FIG 4 zeigt eine zu FIG 3 alternative, weitere Möglichkeit der Zuordnung des ausgewählten Bediengeräteobjektes PANEL 1 zu den graphischen Steuerungsobjekten einer Projektierung durch eine Drag & Drop Aktion im Fenster 51 mit dem Verzeichnisbaum 510. Dabei befindet sich die Projektierebene 52 im Zustand CONTROL, d.h. es werden die verschalteten Softwarefunktionsbausteine der Steuerungsobjekte dargestellt. Wie oben bereits erläutert wurde, wird der Verzeichnisbaum 510 bei der Durchführung der graphischen Projektierung ständig aktualisiert. Mit der oben beschriebenen Aktivierung und Übertragung eines graphischen Bediengeräteobjektes wurde einerseits im Hauptzweig NETWORK 512 ein Unterzweig 51214 PANEL1 ergänzt. Weiterhin wurde im Hauptzweig HMI 513 ebenfalls ein Unterzweig 5131 PANEL1 ergänzt. Es stehen damit im Verzeichnisbaum 510 zwei Zweige für eine Verknüpfung zur Verfügung. So kann das Unterverzeichnis 5111 LINE1 entweder mittels einer graphischen Interaktion DD7 auf das Unterverzeichnis 5131 PANEL1 oder mittels einer Interaktion DD8 auf das Unterverzeichnis 51214 PANEL1 gezogen und damit die gewünschte Zuordnung vollzogen werden.

FIG 5 zeigt das Projektierungsfenster von FIG 3 in einer HMI Detailansicht, wobei im Verzeichnisbaum für das Bediengeräteobjekt den graphischen Steuerungsobjekten der Projektierung zugeordnete Bedienungssubobjekte automatisch generiert und in der Projektierebene in einem Übersichtsbild angezeigt werden. In FIG 5 ist somit besonders in der Projektierebene 52 der Zustand HMI aktiviert. Durch eine Aktivierung des Endzweiges 513111 Liniel im Subzweig 51311 PICTURE im Verzeichnisbaum 510 können in der Projektierebene 52 in einem Übersichtsbild die jedem graphischen Steuerungsobjekt der Gruppe LINE1 automatisch zugeordneten graphischen Bedienobjekte 52H1 für TURNTABLE1, 52H2 für ROLLERWAY1 und 52H3 für TURNTABLE2 angezeigt werden. Dabei können die Bedienobjekte 52H1, 52H2 und 52H3 im Übersichtsbild von einem Anwender mit Hilfe von graphischen Interaktionen frei platziert werden. Das Übersichtsbild ist somit anwendungsabhängig gestalt- und weiter projektierbar, um die Bedienung und Beobachtung der Anlage zu erleichtern. So können im Übersichtsbild z.B. weitere Bedienelementeobjekte für einen Zugriff auf die Bedienobjekte 52H1, 52H2, 52H3 generiert werden. Im Beispiel der FIG 5 sind hierfür Bedienelementeobjekte für einen virtuellen Vorwärtstaster 52V1, einen Rückwärtstaster 52V2, einen Hilfetaster 52V3 und einen Alarmanzeiger 52V4 definiert. Mit diesen können z.B. manuelle Bedienhandlungen an einem der Bedienobjekte 52H1, 52H2, 52H3 vorgenommen, d.h. z.B. eine Simulation von Handbetrieb bzw. Alarmzustände entgegen genommen werden.

Vorteilhaft erfolgt die Generierung derartiger Bedienelementeobjekte ebenfalls mittels graphischer Projektierung. Hierzu ist in FIG 5 im Fenster 53 für die Symbolbibliothek die Mappe 5315 aktiviert. Im Anzeigebereich 532 sind die für Visualisationen im HMI Aktivierungszustand der Projektierebene 52 verfügbaren Bedienelementeobjekte verzeichnet. So stehen beispielsweise HMI Schaltelemente SWITCH, frei belegbare HMI SYMBOLE, HMI Anzeigeelemente PICTUREELEMENT und vieles mehr zur Verfügung. Im Beispiel der FIG 5 wurden beispielsweise die oben genannten Bedienelementeobjekte 52V1, 52V2, 52V3 und 52V4 mittels Drag & Drop Aktionen DD8 bis DD11 vom Fenster 52 für die Symbolbibliothek in die Projektierebene 52 gezogen und dort anwendungsabhängig platziert.

Schließlich stehen im Verzeichnisbaum 510 Endzweige 5131111, 5131112, 5131113 für die graphischen Bedienobjekte 52H1 TURNTABLE1, 52H2 ROLLERWAY1, 52H3 ROLLERWAY2 zur Verfügung. Durch Aktivierung eines dieser Zweige können Detailansichten in der Projektierebene 52 zur Anzeige gebracht werden, mit denen Detailprojektierungen des zugeordneten Steuerungsobjektes möglich sind. So kann z.B. durch Aktivierung des Endzweiges 5131111 ein Bedienbaustein angezeigt werden, der Vorgaben für einen Einrichtbetrieb, für Diagnose und Optimierung ermöglicht.

## Patentansprüche

1. Verfahren zur graphischen Projektierung einer Steuerung und eines Bediengerätes für eine technische Anlage, mit einem Projektierungsfenster (1), das einen Arbeitsbereich (5) zumindest mit einem Fenster (52) für eine Projektierebene zur Anzeige und Verschaltung von graphischen Objekten (52C1-52C4) und einem Fenster (53) für eine Symbolbibliothek mit den für eine Projektierung verfügbaren graphischen Objekten aufweist, wobei vorhanden sind graphische Steuerungsobjekte (5312;53121-53124), die technische Objekte der Anlage repräsentieren, und graphische Bediengeräteobjekte (5314;53141-53143), die für eine Steuerung einsetzbare Bediengeräte repräsentieren, wobei
a) in einem ersten Schritt die graphischen Steuerungsobjekte (53121 - 53124) einer Projektierung im Fenster (53) für die Symbolbibliothek aktiviert und in das Fenster (52) für die Projektierebene (52) übertragen werden,
b) in einem zweiten Schritt die übertragenen graphischen Steuerungsobjekte (52C1-52C4) entsprechend einer anlagenspezifischen Steuerungsaufgabe im Fenster (52) der Projektierebene zur Projektierung eines Steuerungsprogramms logisch verschaltet (52L) werden,
**dadurch gekennzeichnet, dass**
für die Projektierung eines Bediengerätes im gleichen Arbeitszug
c) in einem dritten Schritt zumindest ein graphisches Bediengeräteobjekt (53141) im Fenster (53) der Symbolbibliothek aktiviert und in das Fenster (52) der Projektierebene übertragen wird, und
d) in einem vierten Schritt ein Bedienelement (52V1-52V4) des übertragenen graphischen Bediengeräteobjektes (52N5) ausgewählten Bedienobjekten (52H1-52H3) der übertragenen graphischen Steuerungsobjekte (52C1-52C4) zugeordnet wird.

2. Verfahren nach Anspruch 1, wobei die Aktivierung und Übertragung von graphischen Steuerungs- oder Bediengeräteobjekten in das Projektierungsfenster durch graphische Interaktionen (DD1-DD5) erfolgt.

3. Verfahren nach Anspruch 1 oder 2, wobei als graphische Interaktionen (DD1-DD5) Drag-and-Drop-Aktionen auf die graphischen Objekte mit Hilfe von graphischen Bedienmitteln, insbesondere einem visuellen Cursor, ausgeübt werden.

4. Verfahren nach einem der vorangegangenen Ansprüche, wobei im Projektierungsfenster (1) in einem weiteren Fenster (51) ein Verzeichnisbaum (510) für graphische Objekte in der Projektierebene (52) automatisch generiert und verwaltet wird.

5. Verfahren nach Anspruch 4, wobei durch graphische Interaktionen im Verzeichnisbaum (510), insbesondere durch Aktivierungen, die zu einem Zweig des Verzeichnisbaumes (510) gehörigen übertragenen graphischen Objekte (52C1-52C4) im Fenster der Projektierebene (52) angezeigt werden können.

6. Verfahren nach Anspruch 4 oder 5, wobei der Verzeichnisbaum (510) aufweist einen
a) ersten Hauptzweig (511,CONTROL), in dem zumindest die übertragenen graphischen Steuerungsobjekte (52C1-52C4) einer Projektierung aktivierbar sind, und einen
b) zweiten Hauptzweig (513,HMI), in dem zumindest die übertragenen graphischen Bediengeräteobjekte (52V1 - 52V4) der Projektierung aktivierbar sind.

7. Verfahren nach Anspruch 4, 5 oder 6, wobei der Verzeichnisbaum (510) einen dritten Hauptzweig (512, NETWORK) aufweist, in dem die den graphischen übertragenen Steuerungsobjekten (52C1-52C4) zugeordneten Ankopplungen (52N2-52N5) an einen Datenbus (52B1,52B2) verwaltet werden.

## Claims

1. Method for the graphic planning of a control and of an operating device for a technical installation, with a planning window (1) having a work area (5) at least with one window (52) for a planning level for displaying and linking graphic objects (52C1-52C4) and one window (53) for a symbol library containing the graphic objects available for planning, with graphic control objects (5312; 53121-53124) present, which represent technical objects of the installation, and graphic operating device objects (5314; 53141-53143) present, which represent operating devices that can be used for a control, with
a) the graphic control objects (53121-53124) of planning being activated in the window (53) for the symbol library and being transferred to the window (52) for the planning level (52) in a first step,
b) the transferred graphic control objects (52C1-52C4) being logically combined (52L) according to an installation-specific control task in the window (52) of the planning level for planning a control program in a second step,
**characterized in that**,
for the purpose of planning an operating device in the same work sequence,
c) at least one graphic operating device object (53141) is activated in the window (53) of the symbol library and is transferred to the window (52) of the planning level in a third step and
d) an operating element (52V1-52V4) of the transferred graphic operating device object (52N5) is assigned to selected operating objects (52H1-52H3) of the transferred graphic control objects (52C1-52C4) in a fourth step.

2. Method according to claim 1, with the activation and transfer of graphic control or operating device objects to the planning window being effected by means of graphic interactions (DD1-DD5).

3. Method according to claim 1 or 2, with the graphic interactions (DD1-DD5) used being drag and drop actions on the graphic objects with the aid of graphic operating means, in particular a visual cursor.

4. Method according to one of the preceding claims, with a directory tree (510) for graphic objects in the planning level (52) being automatically generated and managed in the planning window (1) in a further window (51).

5. Method according to claim 4, with the transferred graphic objects (52C1-52C4) associated with a branch of the directory tree (510) being able to be displayed in the window of the planning level (52) by means of graphic interactions in the directory tree (510), in particular by means of activations.

6. Method according to claim 4 or 5, with the directory tree (510) having
a) a first main branch (511, CONTROL), in which at least the transferred graphic control objects (52C1-52C4) of planning can be activated and
b) a second main branch (513, HMI), in which at least the transferred graphic operating device objects (52V1-52V4) of the planning can be activated.

7. Method according to claim 4, 5 or 6, with the directory tree (510) having a third main branch (512, NETWORK), in which the connections (52N2-52N5) to a data bus (52B1, 52B2) which are assigned to the transferred graphic control objects (52C1-52C4) are managed.

## Revendications

1. Procédé de projection graphique d'une commande et d'un appareil de commande d'une installation technique, comprenant une fenêtre (1) de projection, qui a une plage ( 5 ) de travail ayant au moins une fenêtre ( 52 ) pour un plan de projection pour l'affichage et le montage d'objets ( 52C1 à 52C4 ) graphiques et une fenêtre ( 53 ) pour une base de symboles ayant les objets graphiques disponibles pour une projection, dans lequel il y a des objets ( 5312; 53121 à 53124 ) graphiques de commande, qui représentent des objets techniques de l'installation, et des objets ( 5314; 53141 à 53143 ) graphiques d'appareils de commande, qui représentent des appareils de commande pouvant être utilisés pour une commande, dans lequel
a) dans un premier stade, les objets ( 53121 à 53124 ) graphiques de commande d'une projection sont activés dans la fenêtre ( 53 ) pour la base de symboles et sont transmis à la fenêtre ( 52 ) pour le plan ( 52 ) de projection,
b) dans un deuxième stade, les objets ( 52C1 à 52C4 ) graphiques de commande qui ont été transmis sont, conformément à une tâche de commande spécifique à l'installation, reliés ( 52L ) logiquement dans la fenêtre ( 52 ) du plan de projection pour la projection d'un programme de commande,
**caractérisé en ce que**
pour la projection d'un appareil de commande dans le même trait de travail
c) dans un troisième stade, au moins un objet ( 53141 ) graphique d'appareil de commande est activé dans la fenêtre ( 53 ) de la base de symboles et est transmis à la fenêtre ( 52 ) du plan de projection, et
d) dans un quatrième stade, un élément ( 52V1 à 52V4 ) de commande de l'objet ( 52N5 ) graphique d'appareil de commande qui a été transmis est associé à des objets ( 52Hl à 52H3 ) de commande sélectionnés des objets ( 52C1 à 52C4 ) graphiques de commande qui ont été transmis.

2. Procédé suivant la revendication 1, dans lequel l'activation et la transmission d'objets graphiques de commande ou d'appareils de commande dans la fenêtre de projection s'effectuent par des interactions ( DD1 à DD5 ) graphiques.

3. Procédé suivant la revendication 1 ou 2, dans lequel on pratique comme interaction ( DD1 à DD5 ) graphique des actions drag-and-drop sur les objets graphiques à l'aide de moyens de commande graphiques, notamment à l'aide d'un curseur visuel.

4. Procédé suivant l'une des revendications précédentes, dans lequel dans la fenêtre ( 1 ) de projection, on produit automatiquement et on gère dans une autre fenêtre ( 51 ) un arbre ( 510 ) de répertoire d'objets graphiques dans le plan ( 52 ) de projection.

5. Procédé suivant la revendication 4, dans lequel on peut, par des interactions graphiques dans l'arbre ( 510 ) de répertoire, notamment par des activations, afficher dans la fenêtre du plan ( 52 ) de projection les objets ( 52C1 à 52C4 ) graphiques, qui ont été transmis et qui appartiennent à une branche de l'arbre ( 510 ) de répertoire.

6. Procédé suivant la revendication 4 ou 5, dans lequel l'arbre ( 510 ) de répertoire a
a) une première branche ( 511, CONTROL ) principale, dans laquelle au moins les objets ( 52C1 à 52C4 ) graphiques de commande d'une projection qui ont été transmis peuvent être activés, et
b) une deuxième branche ( 513, HMI ) principale, dans laquelle au moins les objets ( 52V1 à 52V4 ) graphiques d'appareils de commande de la projection qui ont été transmis peuvent être activés.

7. Procédé suivant la revendication 4, 5 ou 6, dans lequel l'arbre ( 510 ) de répertoire a une troisième branche ( 512, NETWORK ) principale, dans laquelle les couplages ( 52N2 à 52N5 ) associés aux objets ( 52C1 à 52C4 ) graphiques de commande qui ont été transmis sont gérés sur un bus ( 52Bl, 52B2 ) de données.
